# EUROPEAN PATENT APPLICATION

(11) **EP 3 644 173 A1**
(43) Date of publication of application: **29.04.2020**
(21) Application number: 18819841.0
(22) Date of filing: 07.06.2018
(51) Int. Cl.: G06F 3/0481, G06F 3/16, G06F 17/30, G10L 13/00, G10L 13/10, G10L 15/10, G10L 25/63

(54) **INFORMATION PROCESSING DEVICE, INFORMATION PROCESSING METHOD, AND PROGRAM**

(30) Priority: 20.06.2017 JP 2017120790
(71) Applicant: Sony Corporation, Tokyo 108-0075 (JP)
(72) Inventor: KURIYA Shinobu, Tokyo 108-0075 (JP); TSURUTA Yasushi, Tokyo 108-0075 (JP); NISHIKAWA Kana, Tokyo 108-0075 (JP); OGAWA Hiroaki, Tokyo 108-0075 (JP); OHMURA Junki, Tokyo 108-0075 (JP); TOUYAMA Keisuke, Tokyo 108-0075 (JP)
(74) Representative: MFG Patentanwälte Meyer-Wildhagen Meggle-Freund Gerhard PartG mbB
(86) International application number: PCT/JP2018/021807
(87) International publication number: WO 2018/235607

(57) **Abstract**

The present technology relates to an information processor, an information processing method, and a program that allow information to be presented using a character that allows a user to feel attached.

An information processor of the present technology acquires a context, and selects, on the basis of the context, a predetermined character to be used for presenting information to the user from among a plurality of characters for which attributes defining different features are set. The attribute set for the selected predetermined character is merged with the attribute set for the main character, and information is presented to the user using the main character having a feature defined by the merged attribute. The present technology can be applied to an agent device operated by a voice UI.

## Description

### TECHNICAL FIELD

The present technology relates to an information processor, an information processing method, and a program, and in particular, to an information processor, an information processing method, and a program that allow information to be presented using a character that allows the user to feel attached.

### BACKGROUND ART

In recent years, various technologies related to interactive agents have been developed.

Some interactive agents allow a specific character to appear, and provides various services to the user through the specific character. Meanwhile, some interactive agents call a character prepared for each service from one service, and provide each service to the user through a different character.

### CITATION LIST

### PATENT DOCUMENT

Patent Document 1: Japanese Patent Application Laid-Open No. 2007-334251

### SUMMARY OF THE INVENTION

### PROBLEMS TO BE SOLVED BY THE INVENTION

In the case of the former interactive agent, although it is possible to feel attachment to the specific character, it is difficult to adapt the character to various services while maintaining the personality image or the like of the character. In a case of expanding services in response to various needs of users, development takes time.

Additionally, in the case of the latter interactive agent, since the character that deals with the user differs by the service, it is difficult for the user to feel attached to the character.

The present technology has been made in view of such circumstances, and aims to present information using a character that allows the user to feel attached.

### SOLUTIONS TO PROBLEMS

An information processor according to one aspect of the present technology includes an acquisition portion that acquires a context, and a character selection portion that selects, on the basis of the context, a predetermined character to be used for presenting information to a user from among a plurality of characters for which attributes defining different features are set.

A management portion that manages a main character selected as the main character, and an output controller that presents information to the user using the main character can also be provided.

The character selection portion can be caused to merge the attribute set for the predetermined character with the attribute set for the main character, and the output controller can be caused to present information to the user using the main character having a feature defined by the merged attribute.

The character selection portion can be caused to merge a plurality of types of the attributes set for the main character and the predetermined character by assigning predetermined weights to the same types of attributes.

The feature of each of the plurality of characters and the main character can be defined by the attribute of at least any one of speech expression, speech content, tone, or appearance.

The output controller can be caused to present information to the user on the basis of information regarding a rule of the speech content or on the basis of model information of the speech content obtained by performing learning based on a dialogue corpus.

The acquisition portion can be caused to analyze text data input by the user or speech voice data of the user, and acquire the context.

The character selection portion can be caused to select the predetermined character from among the plurality of characters managed by an external device.

A character management portion that manages the plurality of characters can also be provided. In this case, the character selection portion can be caused to select the predetermined character from among the plurality of characters managed by the character management portion.

The acquisition portion can be caused to acquire a content selected by the user as the context, and the character selection portion can be caused to select the predetermined character according to the content selected by the user.

The acquisition portion can be caused to acquire a content to be presented to the user as the context, and the character selection portion can be caused to select the predetermined character according to the content to be presented to the user.

The acquisition portion can be caused to acquire a profile of the user as the context, and the character selection portion can be caused to select the predetermined character according to the profile of the user.

The acquisition portion can be caused to acquire a service to be used by the user as the context, and the character selection portion can be caused to select the predetermined character according to the service.

The acquisition portion can be caused to acquire, as the context, an emotion of the user recognized on the basis of at least any one of an analysis result of a face image of the user, an analysis result of a speech voice of the user, or an analysis result of a speech content of the user, and the character selection portion can be caused to select the predetermined character according to the emotion of the user.

A preference learning portion that learns a preference of the user with respect to the main character having a feature defined by the merged attribute can also be provided. In this case, the management portion can be caused to adjust the attribute set for the main character on the basis of the learning result of the preference of the user.

The character selection portion can be caused to select a plurality of characters as the predetermined character, and merge the attribute set for each of the plurality of selected predetermined characters with the attribute set for the main character.

In one aspect of the present technology, a context is acquired, and on the basis of the context, a predetermined character to be used for presenting information to the user is selected from among a plurality of characters for which attributes defining different features are set.

### EFFECTS OF THE INVENTION

According to the present technology, it is possible to present information using a character that allows the user to feel attached.

Note that the effect described herein is not necessarily limited, and may be any effect described in the present disclosure.

### BRIEF DESCRIPTION OF DRAWINGS

Fig. 1 is a diagram showing a configuration example of an agent system according to an embodiment of the present technology.
Fig. 2 is a diagram showing an example of speech.
Fig. 3 is a diagram showing an example of an external character.
Fig. 4 is a diagram showing an example of merging of characters.
Fig. 5 is a diagram showing an example of speech by a merged internal character.
Fig. 6 is a diagram showing examples of external characters.
Fig. 7 is a diagram showing an example of attribute information that defines the feature of a character.
Fig. 8 is a block diagram showing a hardware configuration example of an agent device.
Fig. 9 is a block diagram showing a functional configuration example of the agent device and an external character management device.
Fig. 10 is a diagram showing an example of an external character DB.
Fig. 11 is a sequence diagram for describing a series of processing of the agent system.
Fig. 12 is a sequence diagram following Fig. 11 for describing a series of processing of the agent system.
Fig. 13 is a block diagram showing another configuration example of the agent device.
Fig. 14 is a diagram showing another configuration example of the agent system.
Fig. 15 is a diagram showing still another configuration example of the agent system.
Fig. 16 is a block diagram showing another functional configuration example of the agent device and the external character management device.
Fig. 17 is a diagram showing an example of other attribute information that defines the feature of a character.
Fig. 18 is a block diagram showing another hardware configuration example of the agent device.
Fig. 19 is a block diagram showing a configuration example of a computer.

### MODE FOR CARRYING OUT THE INVENTION

Hereinafter, modes for carrying out the present technology will be described. Note that the description will be given in the following order.
1. Merging of characters
2. Configuration of each device of agent system
3. Operation of each device of agent system
4. Modification

### <1. Merging of characters>

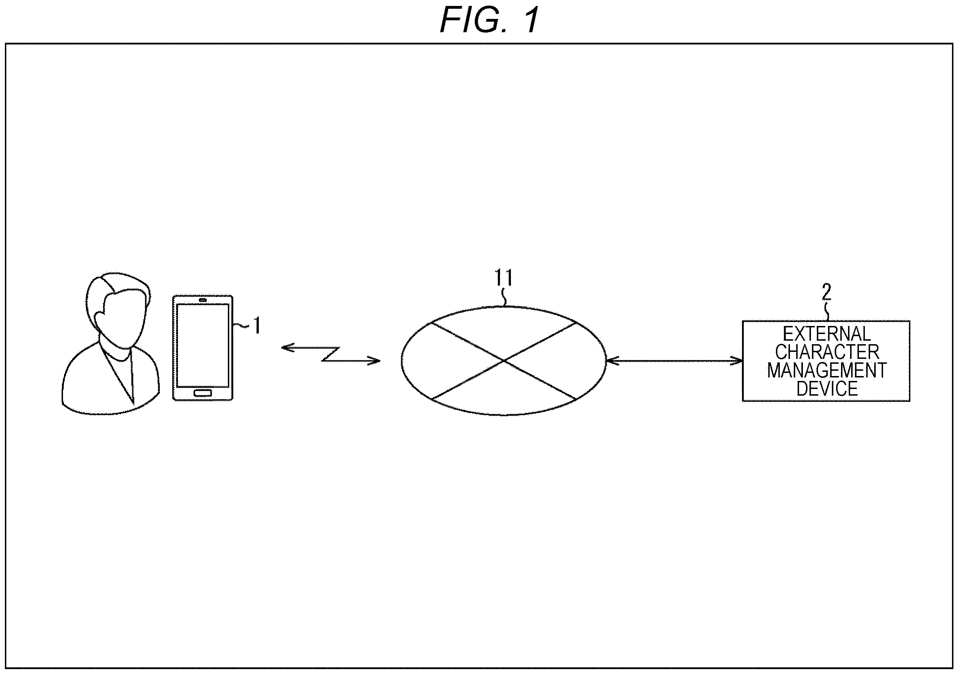

Fig. 1 is a diagram illustrating a configuration example of an agent system according to an embodiment of the present technology.

As shown in Fig. 1, the agent system is configured by connecting an agent device 1 and an external character management device 2 through a network 11 such as the Internet.

In the example of Fig. 1, the agent device 1 is a smartphone that can be carried by the user. The agent device 1 may be another portable terminal having a display such as a tablet terminal or a watch-type wearable terminal, or may be a device not having a display.

The agent device 1 has a so-called interactive agent function of presenting various information such as a user's schedule and e-mail sent to the user by voice, and detecting speech voice of the user and presenting information according to the content of speech by voice, for example. Information is presented by the agent function by voluntarily presenting from the system side, or presenting information in response to an inquiry by the user.

The agent function by the agent device 1 is achieved through characters. That is, information is presented by the agent device 1 in the form of a character speaking to the user. On the other hand, the user's inquiry is made in the form of the user speaking to the character.

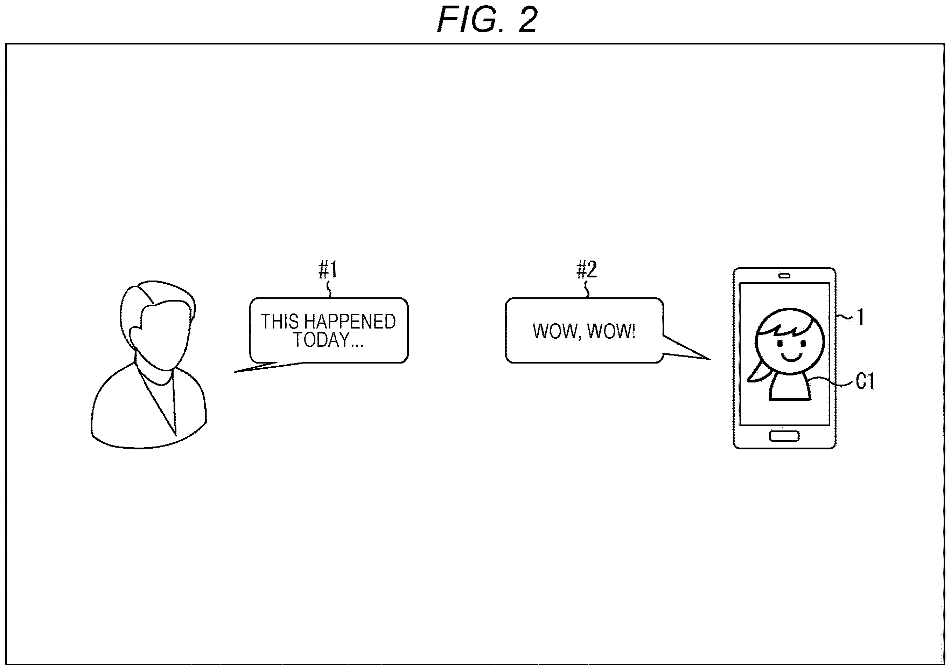

Fig. 2 is a diagram showing an example of speech made through a character.

In the example of Fig. 2, the agent function is executed by the agent device 1, and the appearance image of a character C1 is displayed on the display. The following describes a case where the character has an appearance image and the user can visually recognize the character. However, an aurally recognizable character that does not have an appearance image may be managed in the agent device 1.

As shown in balloon #1, when the user says "This happened today...", the speech voice is recognized by the agent function. Additionally, by performing language analysis, the voice "wow, wow!" is output as a response of the character C1, as shown in balloon #2. The voice "wow, wow!" is output together with displaying of an image showing how the character C1 speaks.

That is, the character C1 shown in Fig. 2 is a character having a personality feature that gives the user a compliment. Depending on the content of the information to be presented, the information may be presented to the user in words expressing a compliment to the user, and in a tone of voice used when giving a compliment, for example.

Thus, the agent function by the agent device 1 is achieved in such a manner as to communicate with one character. The user of the agent device 1 needs to preselect one favorite character from among a plurality of prepared characters, for example. The character selected by the user is managed in the agent device 1.

Hereinafter, one character that appears at the time of execution of the agent function and communicates with the user as the main character is referred to as an internal character as appropriate. Additionally, characters other than the internal character are referred to as external characters as appropriate. The external character management device 2 of Fig. 1 is a device that functions as a server that manages a plurality of external characters.

The internal character managed by the agent device 1 and the external character managed by the external character management device 2 have different features. The feature of a character is defined by a plurality of types of attributes, as described later.

Returning to the description of Fig. 1, the agent device 1 selects an external character according to the context from the external characters managed by the external character management device 2, and acquires information of the selected external character. The context includes various situations such as a user profile, the user's emotion identified on the basis of the user's speech content, content of information to be presented to the user, environment such as noise, and time zone.

The agent device 1 merges the feature of the selected external character with the feature of the internal character by using the information acquired from the external character management device 2, and generates an internal character having a new feature. The features of characters are merged by merging attributes that define the features of characters. When merging is performed, information is presented to the user through the internal character that incorporates features of the external character.

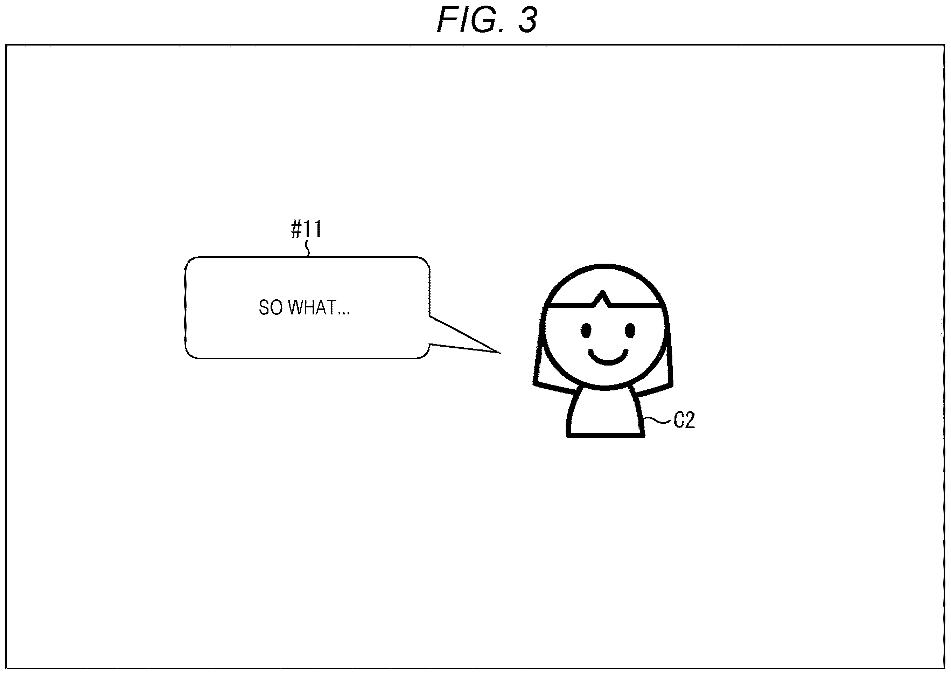

Fig. 3 is a diagram showing an example of an external character.

A character C2 in Fig. 3 is an external character having an appearance image different from the character C1 in Fig. 1. The character C2 is a character that, when the user says "This happened today..." as similar to the case of Fig. 2, outputs a voice "so what ..." as shown in balloon #11, for example. The voice "so what..." is output in a cold tone.

The character C2 shown in Fig. 3 is an external character having a heartless feature with a small response to the user. Thus, an external character having a feature different from the internal character is selected according to the context, and used for feature merging.

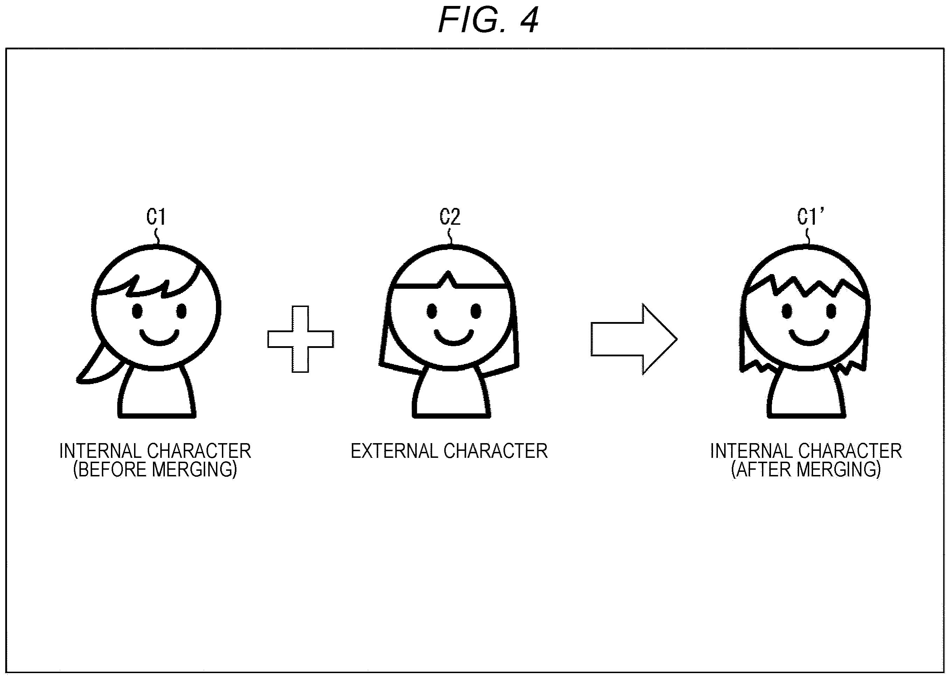

Fig. 4 is a diagram showing an example of merging of the feature of the internal character and the feature of the external character.

In a case where the character C2 is selected as the external character, the attribute of the character C1, which is the internal character, defining the feature of complimenting the user, and the attribute of the character C2 defining the heartless feature are merged. As a result of this merging, a character C1' having a new feature is generated as indicated by the point of the outlined arrow.

In Fig. 4, the appearance of the character C1' is an appearance in which the character C1 and the character C2 are mixed. Other features of the character C1' such as speech content and tone are also a mixture of the feature of the character C1 and the feature of the character C2.

Note that in Fig. 4, for convenience of explanation, the appearance of the internal character largely changes before and after the merge. However, in practice, the merge is performed by setting a lower weight on the attribute of the external character used for merging than on the attribute of the internal character. While maintaining the basic features of the internal character before merging, an internal character incorporating a slight amount of the feature of the external character is generated as the merged internal character.

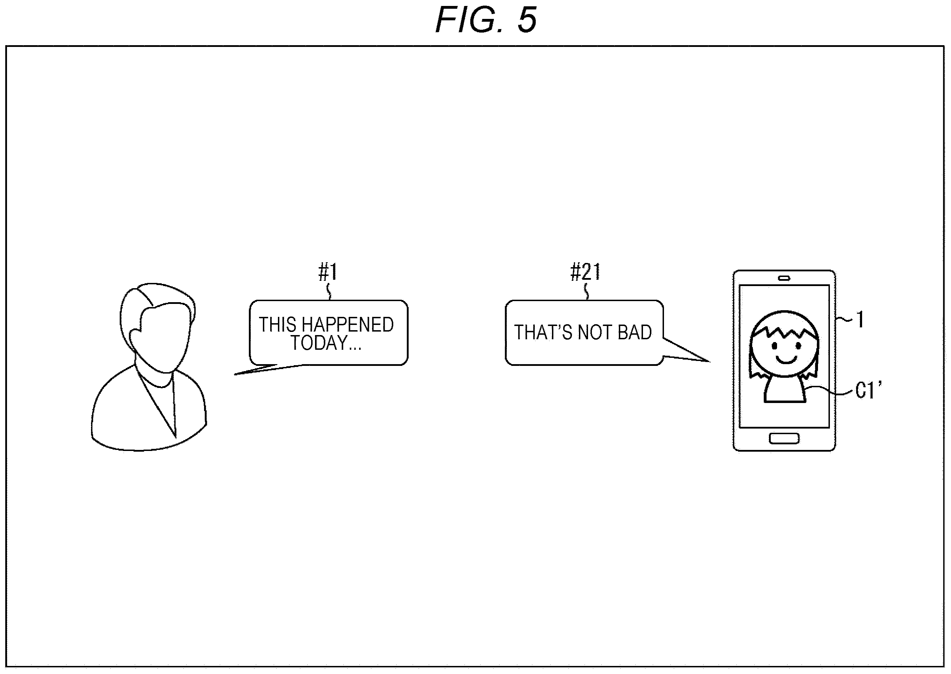

Fig. 5 is a diagram showing an example of speech by the merged internal character.

In the example of Fig. 5, the appearance image of the character C1' generated by merging the feature of the character C2 is displayed on the display of the agent device 1.

In this state, when the user says "This happened today..." as similar to the case of Fig. 2, a voice "That's not bad." is output as a response of the character C1' as shown in balloon #21.

That is, voice containing only a small amount of compliment to the user, in which a content that the character C1 would return and a content that the character C2 would return are merged, is output as a response of the character C1'. The voice "That's not bad." is output in a tone of voice used when giving only a small amount of compliment.

For example, after repeatedly giving responses containing a compliment, if it is detected, as a context, that the user is bored with such responses of the character C1, the character C2 is selected in accordance with the context, and a response containing only a small amount of compliment, which is different from usual, is given.

As described above, the agent device 1 can change the feature of the internal character by selecting an external character according to the context and merging the feature of the selected external character. The change of feature of the internal character performed in the agent device 1 is achieved in a method different from when switching the character used for communication with the user.

Additionally, the agent device 1 can present various types of information to the user in a varied manner, through the internal character with a varied feature.

The variation in content, tone, and the like of the response according to the context makes it less likely for the user to feel bored with the internal character.

Additionally, since the feature of the merged character is a feature that maintains the basic feature of the character before merging, output by the merged character will be felt as a slight change for the user. Since the basic feature of the character do not change before and after the merge, the user can keep feeling attached to the internal character.

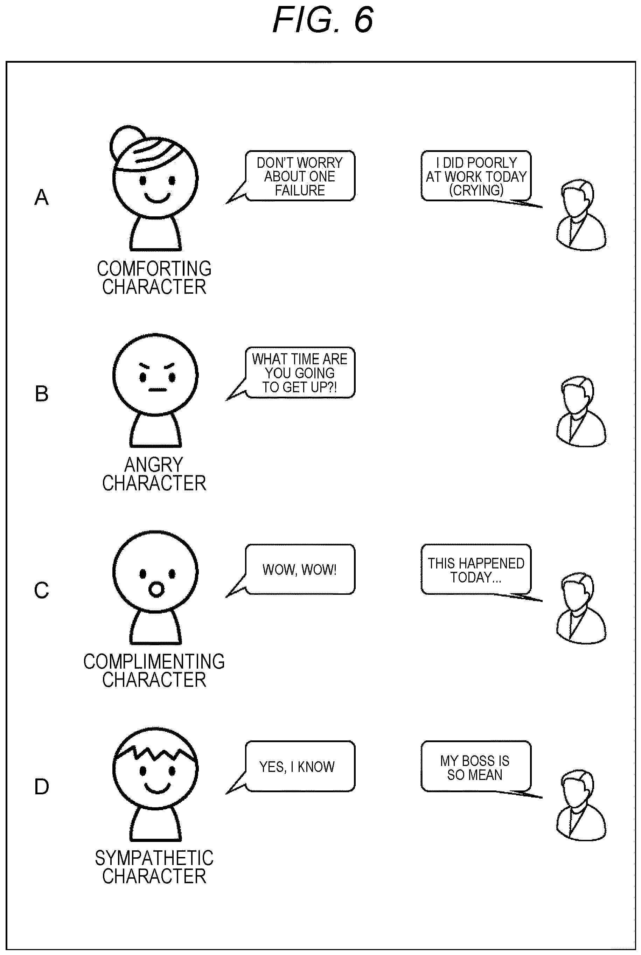

Fig. 6 is a diagram showing examples of the external character.

A comforting character of A of Fig. 6 is an external character that has a feature of sympathizing and giving comfort in response to the user's speech. For example, when the user says "I did poorly at work today", a voice "Don't worry about one failure" is output as a response of the comforting character of A of Fig. 6.

The comforting character of A of Fig. 6 is selected if it is detected from the user's speech, as a context, that the user is depressed, for example. When merged with the feature of the comforting character of A of Fig. 6, the internal character outputs voice having a more comforting content than before merging.

An angry character of B of Fig. 6 is an external character that has a feature of scolding the user. For example, when the user is oversleeping, a voice "What time are you going to get up?!" is output as a response of the angry character of B of Fig. 6.

The angry character of B of Fig. 6 is selected if it is detected, as a context, that the user continues to sleep even though he/she has been prompted to wake up by the agent function, for example. When merged with the feature of the angry character of B of Fig. 6, the internal character outputs voice having a more scolding content than before merging.

A comforting character of C of Fig. 6 is an external character that has a feature of complimenting the user, as similar to the above-described character C1.

A sympathetic character of D of Fig. 6 is an external character that has a feature of going with the user's tone. For example, when the user says "My boss is so mean", a voice "Yes, I know" is output as a response of the sympathetic character of D of Fig. 6.

The sympathetic character of D of Fig. 6 is selected if it is detected from the user's speech, as a context, that the user is stressed, for example. When merged with the feature of the sympathetic character of D of Fig. 6, the internal character outputs voice having a more sympathetic content than before merging.

Thus, the external character management device 2 manages a plurality of external characters having different features.

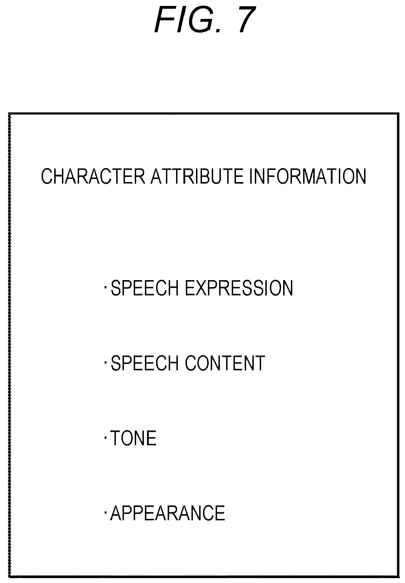

Fig. 7 is a diagram showing an example of attribute information that defines the feature of a character.

For example, the feature of a character is defined by attributes of speech expression, speech content, tone, and appearance. Attribute information includes information indicating the attributes.

Speech expression is an attribute that represents the way (wording) of expressing speech of a predetermined content. In a case of expressing speech voice as a character string, speeches of characters having different speech expression attributes will be expressed in different character strings even if they have the same contents.

For example, in a case of outputting voice of a content asking the user what he/she is doing, the speech voice of a certain character A is "What're ya doin'?" and the speech voice of another character B is "May I ask what you are doing?".

Speech content is an attribute that represents the content of speech. Speeches of characters having different speech content attributes will be speeches with different contents made in response to the same speech by the user.

For example, when the user says "I did poorly at work today...", the speech voice of a certain character A (character having sympathetic feature) will be "That's too bad...", and the speech voice of another character B (character having optimistic feature) will be "never mind!". Additionally, the speech voice of a character C (character having strict feature) will be "It's your own fault".

Tone is an attribute of elements that make up voice, such as voice quality, frequency, and intonation. Difference in tone attributes lead to expression of various voices such as older male voice, older female voice, younger male voice, younger female voice, and child voice.

Text to speech (TTS) parameters can be used as a tone attribute. TTS parameters include emotion (emotion, joy, anger, and sadness), pitch (high and low of sound), speed (speaking speed), volume (volume), and the like.

Appearance is an attribute that represents the looks of a character. An appearance attribute includes an appearance image of the character and information indicating how the character moves.

Attribute information representing such various attributes described above is associated with each character and managed. The agent device 1 manages attribute information of the internal character, and the external character management device 2 manages attribute information of each of the external characters.

Thus, the attributes that define the feature of a character include external attributes such as tone and appearance image, and internal attributes such as speech expression and speech content related to generation of response contents.

The attributes that define the feature of a character are not limited to the four types of attributes shown in Fig. 7. The feature of a character may be defined by attributes other than the four types. Additionally it is only necessary that at least one of the four types of attributes shown in Fig. 7 be included in the attribute information. For example, the appearance attribute can be excluded from the attribute information.

### <2. Configuration of each device of agent system>

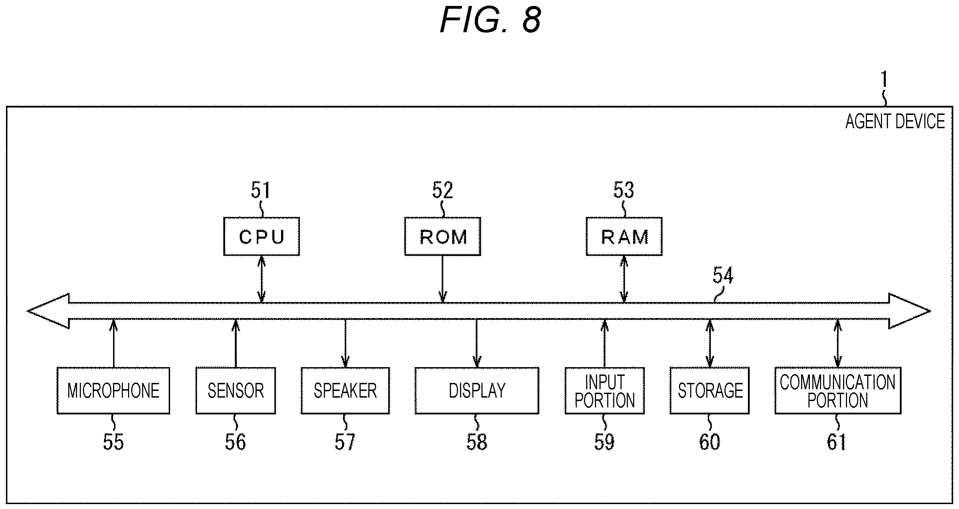

Fig. 8 is a block diagram showing a hardware configuration example of the agent device 1.

A central processing unit (CPU) 51, a read only memory (ROM) 52, and a random access memory (RAM) 53 are mutually connected through a bus 54.

A microphone 55, a sensor 56, a speaker 57, a display 58, an input portion 59, a storage 60, and a communication portion 61 are connected to the bus 54.

The microphone 55 detects speech voice of the user.

The sensor 56 includes various sensors such as a camera, an acceleration sensor, a gyro sensor, and a positioning sensor. The sensor 56 outputs an image obtained by image capturing. Additionally, the sensor 56 outputs information indicating a detection result such as an acceleration, an angular velocity, and a current position.

The speaker 57 outputs voice (synthetic speech) generated by TTS or the like.

The display 58 includes an LCD, an organic EL display, or the like. The display 58 displays various screens such as a screen including an appearance image of the internal character.

The input portion 59 is configured by a touch panel superimposed on the display 58 and various buttons provided in a case of the agent device 1. The input portion 59 detects an operation by the user, and outputs information indicating the content of the operation.

The storage 60 includes a non-volatile memory or the like. The storage 60 stores various data such as information regarding the internal character and data for voice synthesis, in addition to a program executed by the CPU 51.

The communication portion 61 is configured by a network interface or the like. The communication portion 61 performs wireless or wired communication with the external character management device 2.

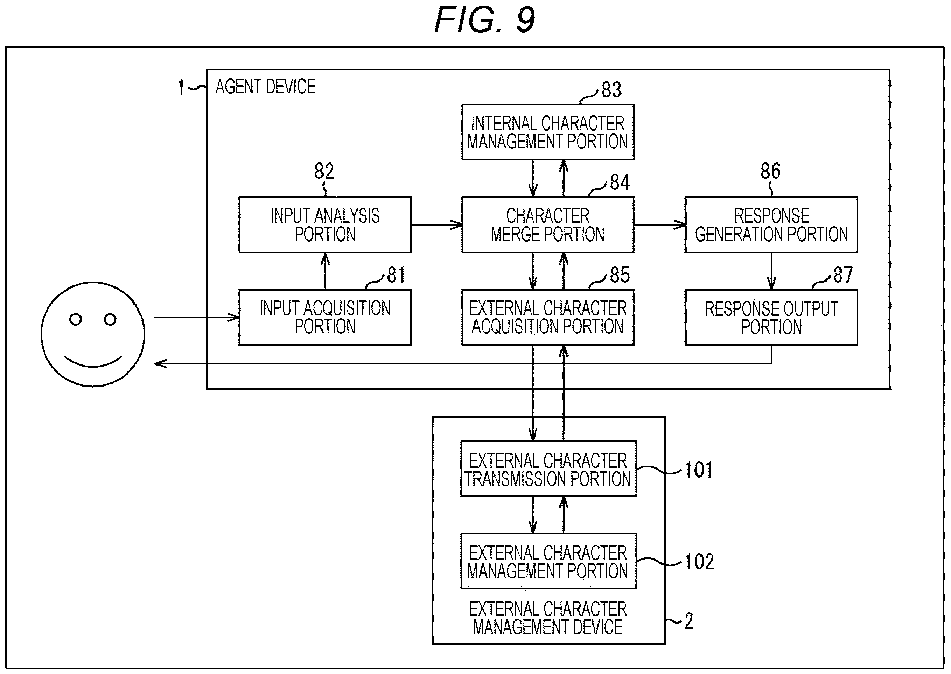

Fig. 9 is a block diagram showing a functional configuration example of the agent device 1 and the external character management device 2.

At least some of function parts of the agent device 1 shown in Fig. 9 are implemented by executing a predetermined program by the CPU 51 of Fig. 8. At least some of function parts of the external character management device 2 are implemented by executing a predetermined program by a CPU of a computer that implements the external character management device 2.

The agent device 1 includes an input acquisition portion 81, an input analysis portion 82, an internal character management portion 83, a character merge portion 84, an external character acquisition portion 85, a response generation portion 86, and a response output portion 87.

The input acquisition portion 81 acquires the user's speech voice and environmental sound detected by the microphone 55. Additionally, the input acquisition portion 81 acquires an image captured by a camera forming the sensor 56. The input acquisition portion 81 outputs the acquired voice data and image to the input analysis portion 82.

The input analysis portion 82 performs voice recognition on the voice data supplied from the input acquisition portion 81, and performs semantic analysis of the recognized speech voice to specify the content of the user's speech. The input analysis portion 82 outputs information indicating the specified content of the user's speech to the character merge portion 84.

Additionally, the input analysis portion 82 performs image processing on the input image to recognize the user's face and the surrounding situation. Additionally, the input analysis portion 82 analyzes the face image of the recognized user to estimate the user's emotion. For example, the input analysis portion 82 has information indicating a correspondence between an emotion and a feature amount obtained by analyzing a face image. The input analysis portion 82 outputs information indicating the user's emotion to the character merge portion 84 as context information.

The user's emotion may be estimated on the basis not only of the analysis result of the face image, but also of the tone of the user's voice and the content of the user's speech specified by analyzing the speech voice. Emotion can be estimated on the basis of at least one of the analysis result of the face image, the tone of the user's voice, or the content of the user's speech, which are results of analysis on the speech voice. Additionally, in a case where the input by the user is text input, semantic analysis may be performed on the text data input by the user, and emotion may be estimated on the basis of the analysis result.

Other information, such as the surrounding situation specified by analyzing environmental sound and images of the surroundings, date and time, and current position, may be included in context information and supplied from the input analysis portion 82 to the character merge portion 84.

Thus, the input analysis portion 82 functions as an acquisition portion that acquires a context including the user's situation and the surrounding situation.

The internal character management portion 83 manages attribute information of the internal character selected as the main character. The internal character management portion 83 outputs the attribute information of the internal character to the character merge portion 84.

The character merge portion 84 determines the type of the external character on the basis of the context information supplied from the input analysis portion 82 as described with reference to Fig. 6.

For example, the character merge portion 84 has information indicating the correspondence between context information and the type of the external character. The character merge portion 84 refers to such information indicating the correspondence, and selects the type of the external character according to the context information supplied from the input analysis portion 82. The character merge portion 84 functions as a selection portion that selects an external character on the basis of the context.

Additionally, the character merge portion 84 outputs a character type representing the determined type of the external character to the external character acquisition portion 85, and requests acquisition of attribute information of the external character according to the character type.

When the attribute information of the external character is supplied from the external character acquisition portion 85, the character merge portion 84 merges the feature of the internal character and the feature of the external character. As mentioned above, the features of characters are merged by merging attributes that define the features of characters.

The attributes are merged by assigning a predetermined weight to each attribute included in the attribute information, and adding together the attributes of the same type, for example. For example, the character merge portion 84 sets a weight of 0.9 for each attribute of the internal character and a weight of 0.1 for each attribute of the external character, and adds together the same attributes to merge the attributes.

For example, a different weight may be set for each type of attribute, such as 0.9 for speech expression, 0.5 for speech content, 0.8 for tone, and 0.95 for appearance of the internal character, and 0.1 for speech expression, 0.5 for speech content, 0.2 for tone, and 0.05 for appearance of the external character.

The character merge portion 84 outputs the attribute information of the merged internal character generated by merging the feature of the external character to the response generation portion 86, together with the analysis result of the user's input.

The external character acquisition portion 85 controls the communication portion 61 and transmits the character type supplied from the character merge portion 84, to request the external character management device 2 to transmit attribute information of the external character. The external character acquisition portion 85 acquires attribute information of the external character transmitted from the external character management device 2 and received by the communication portion 61, and outputs the acquired attribute information to the character merge portion 84.

The response generation portion 86 generates a response to the user on the basis of the merged internal character supplied from the character merge portion 84. For example, the response generation portion 86 generates a response of a content according to the user's speech, on the basis of the speech content attribute and the speech expression attribute of the internal character.

Here, the response of the content according to the user's speech may be generated on the basis of rule information in which a relation between the content of the user's speech and the content of the response is defined by a rule, or may be generated on the basis of model information prepared as information to be used for generating a response.

For example, model information is generated in advance by performing learning based on a dialogue corpus, according to a model in which the content of the user's speech is input data and the content of the response is output data. The rule information or the model information is prepared in the response generation portion 86 for each combination of the speech content attribute and the speech expression attribute, for example.

The response generation portion 86 outputs text data representing the content of the response generated in this manner to the response output portion 87, together with the tone and appearance attributes of the internal character.

The response output portion 87 generates data of the speech voice according to the text data supplied from the response generation portion 86 on the basis of the tone attribute of the internal character, and causes the speaker 57 to output the speech voice. Additionally, the response output portion 87 causes the display 58 to display the appearance image of the internal character on the basis of the appearance attribute of the internal character. The response output portion 87 functions as an output controller that controls the presentation of information to the user.

On the other hand, the external character management device 2 includes an external character transmission portion 101 and an external character management portion 102.

The external character transmission portion 101 receives the request for an external character transmitted from the external character acquisition portion 85. The requests for an external character also includes a character type. The external character transmission portion 101 selects an external character according to the character type from the external characters managed by the external character management portion 102, and transmits attribute information of the selected external character to the agent device 1.

The external character management portion 102 manages an external character DB which is a database of external characters. The external character management portion 102 reads the attribute information of the external character according to the character type from the external character DB, and outputs the attribute information to the external character transmission portion 101.

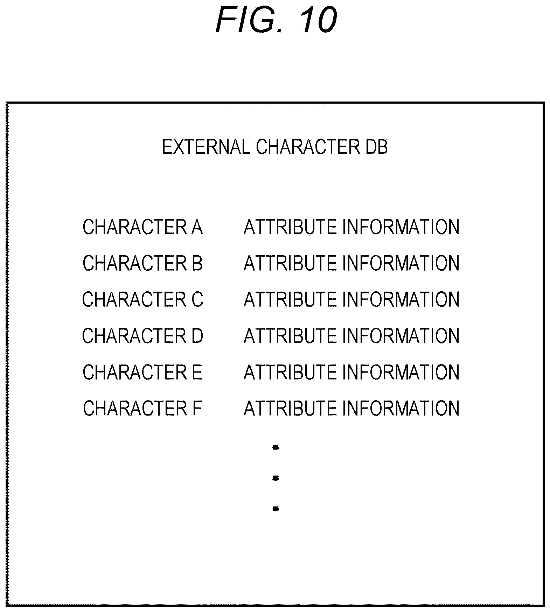

Fig. 10 is a diagram showing an example of the external character DB managed by the external character management portion 102.

As shown in Fig. 10, in the external character DB, attribute information including the attributes of speech expression, speech content, tone, and appearance is stored in association with each character.

### <3. Operation of each device of agent system>

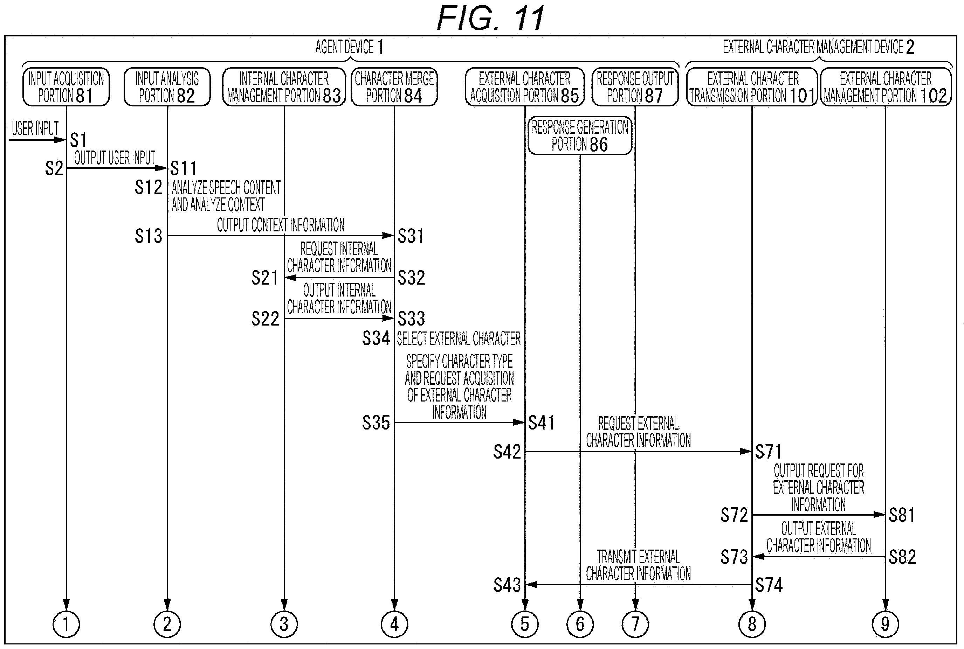

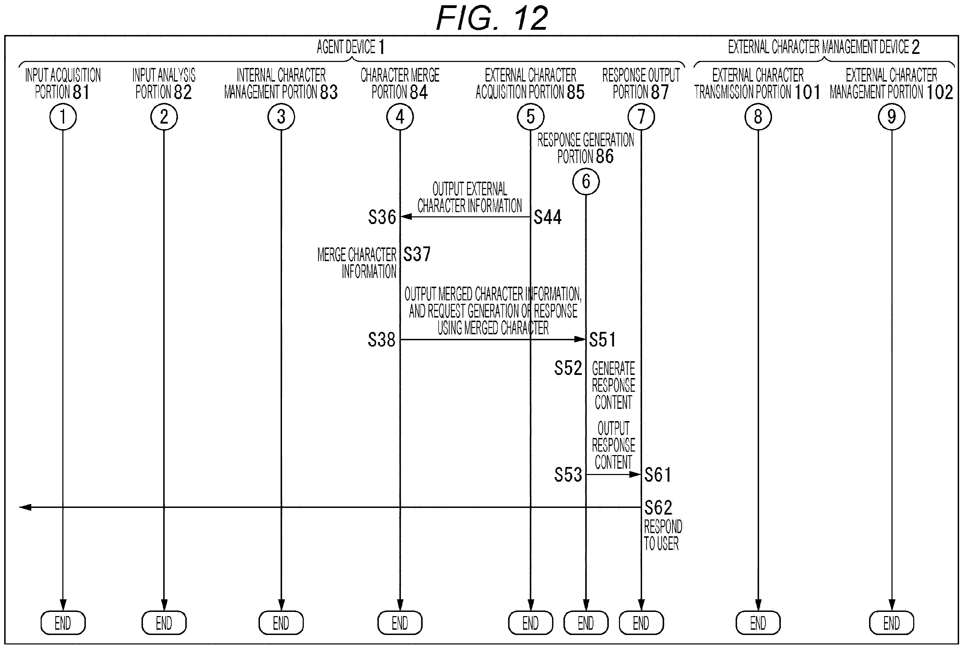

Next, with reference to the flowcharts of Figs. 11 and 12, a series of processing of the agent system will be described.

In step S1, the input acquisition portion 81 of the agent device 1 acquires user input such as the user's speech voice. In the input acquisition portion 81, an image or the like obtained by capturing an image of the surroundings is also acquired as appropriate.

In step S2, the input acquisition portion 81 outputs the acquired user input to the input analysis portion 82.

In step S11, the input analysis portion 82 acquires the user input supplied from the input acquisition portion 81.

In step S12, the input analysis portion 82 analyzes the content of the user's speech and the context including the user's emotion on the basis of the user input. That is, voice data is subjected to voice recognition and semantic analysis to specify the content of the user's speech. Additionally, the captured image is subjected to face image analysis to estimate the user's emotion.

In step S13, the input analysis portion 82 outputs the context information to the character merge portion 84 together with the analysis result of the user input.

In step S31, the character merge portion 84 acquires the information supplied from the input analysis portion 82.

In step S32, the character merge portion 84 requests the internal character management portion 83 for attribute information of the internal character.

In step S21, the internal character management portion 83 acquires the request from the character merge portion 84.

In step S22, the internal character management portion 83 outputs the attribute information of the internal character that it manages to the character merge portion 84.

In step S33, the character merge portion 84 acquires the attribute information of the internal character supplied from the internal character management portion 83.

In step S34, the character merge portion 84 selects an external character according to the context information.

In step S35, the character merge portion 84 requests the external character acquisition portion 85 to acquire attribute information of an external character by specifying the character type.

In step S41, the external character acquisition portion 85 acquires the request from the character merge portion 84.

In step S42, the external character acquisition portion 85 requests the external character management device 2 for the attribute information of the external character by transmitting the character type.

In step S71, the external character transmission portion 101 of the external character management device 2 receives the request from the external character acquisition portion 85.

In step S72, the external character transmission portion 101 requests the external character management portion 102 for the attribute information of the external character according to the character type.

In step S81, the external character management portion 102 acquires the request from the external character transmission portion 101.

In step S82, the external character management portion 102 reads the attribute information of the external character corresponding to the character type from the external character DB, and outputs the attribute information to the external character transmission portion 101.

In step S73, the external character transmission portion 101 acquires the attribute information of the external character supplied from the external character management portion 102.

In step S74, the external character transmission portion 101 transmits the attribute information of the external character to the agent device 1.

In step S43, the external character acquisition portion 85 of the agent device 1 acquires the attribute information of the external character transmitted from the external character management device 2.

In step S44 (Fig. 12), the external character acquisition portion 85 outputs the attribute information of the external character to the character merge portion 84.

In step S36, the character merge portion 84 acquires the external character information output from the external character acquisition portion 85.

In step S37, the character merge portion 84 merges the attribute information of the internal character and the attribute information of the external character.

In step S38, the character merge portion 84 outputs the attribute information of the merged internal character to the response generation portion 86, and requests generation of a response using the merged character. The character merge portion 84 also outputs an analysis result of user input to the response generation portion 86.

In step S51, the response generation portion 86 acquires the request from the character merge portion 84.

In step S52, the response generation portion 86 generates a response content according to the user's input, on the basis of the attribute information of the merged internal character supplied from the character merge portion 84.

In step S53, the response generation portion 86 outputs the generated response content to the response output portion 87.

In step S61, the response output portion 87 acquires the response content supplied from the response generation portion 86.

In step S62, the response output portion 87 responds to the user by causing the speaker 57 to output speech voice indicating the response content, and causing the display 58 to display the appearance image of the internal character.

The series of processing described above is performed each time user input is acquired, for example. Additionally, when information is presented to the user spontaneously without requiring input by the user, the above-described series of processing is performed at each timing of presenting information.

By repeatedly performing the above processing, the agent device 1 can gradually change the feature of the internal character according to the context. Even with the gradual change, the basic feature of the internal character is maintained. Hence, the user can use the agent function while feeling attached to the internal character.

### <4. Modification>

### • Modification 1

While one external character is selected according to context information in the above embodiment, a plurality of external characters may be selected. In this case, a feature of each of a plurality of external characters is merged with the feature of the internal character.

Additionally, not all types of attributes of one external character are merged with the attributes of the internal character. It is only necessary that at least one type of attribute be used for merging.

### • Modification 2

While the external character to be used for merging is selected on the basis of information estimated by the agent device 1 such as the user's emotion in the above embodiment, the user may be allowed to select the external character to be used for merging by him/herself.

The user selects an external character by operating a button displayed on the display 58 or calling the name of the external character, for example. In this case, information indicating the content of the user's selection is included in the context information, and is used for selecting the external character.

### • Modification 3

The external character to be used for merging may be selected according to the content of information to be presented to the user.

For example, in a case where the content of information to be presented by voice is one that comforts the user, an external character having the feature of comforting the user as shown in A of Fig. 6 is selected. Additionally, in a case where the content of information to be presented by voice is one that scolds the user, an external character having the feature of scolding the user as shown in B of Fig. 6 is selected. In this case, the content of information to be presented to the user is used as context information.

### • Modification 4

An external character to be used for merging may be selected according to the profile of the user.

For example, in a case where it is specified that the user is a child as a profile by analyzing an image captured by a camera, an external character having an attribute representing an adult feature is selected.

Additionally, in a case where it is specified that the user jokes as a profile by analyzing the speech voice, an external character having an attribute representing a feature that is good at handling jokes is selected. In this case, the profile of the user is used as context information.

In this way, various types of information can be used as the context to select external characters. The external character may be selected on the basis of a combination of at least two or more information from among information such as the user's emotion, the selected content, the profile, and the content of the information to be presented.

### • Modification 5

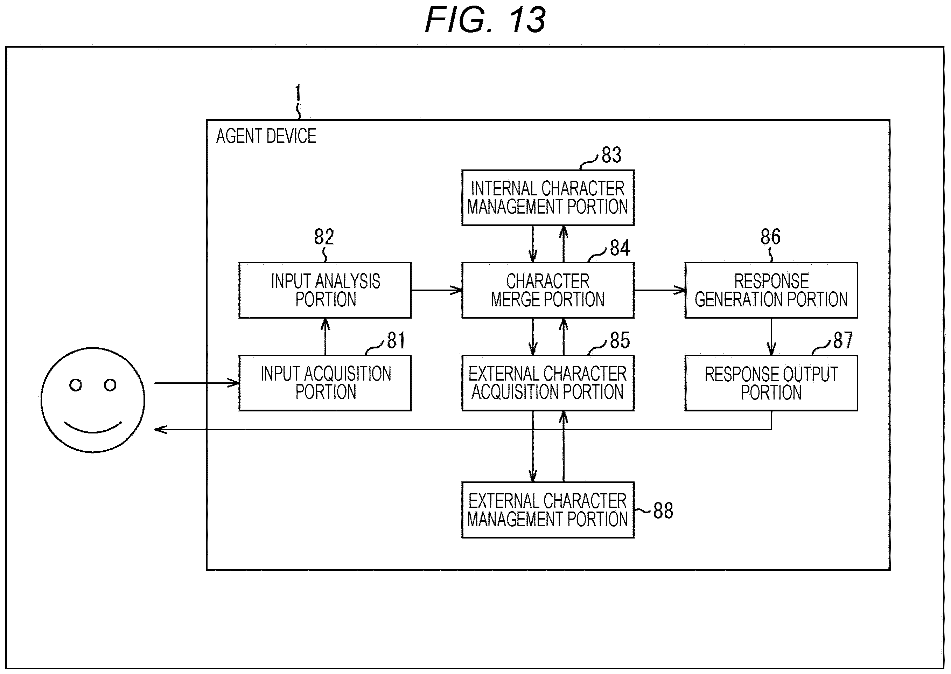

Fig. 13 is a block diagram showing another configuration example of an agent device 1.

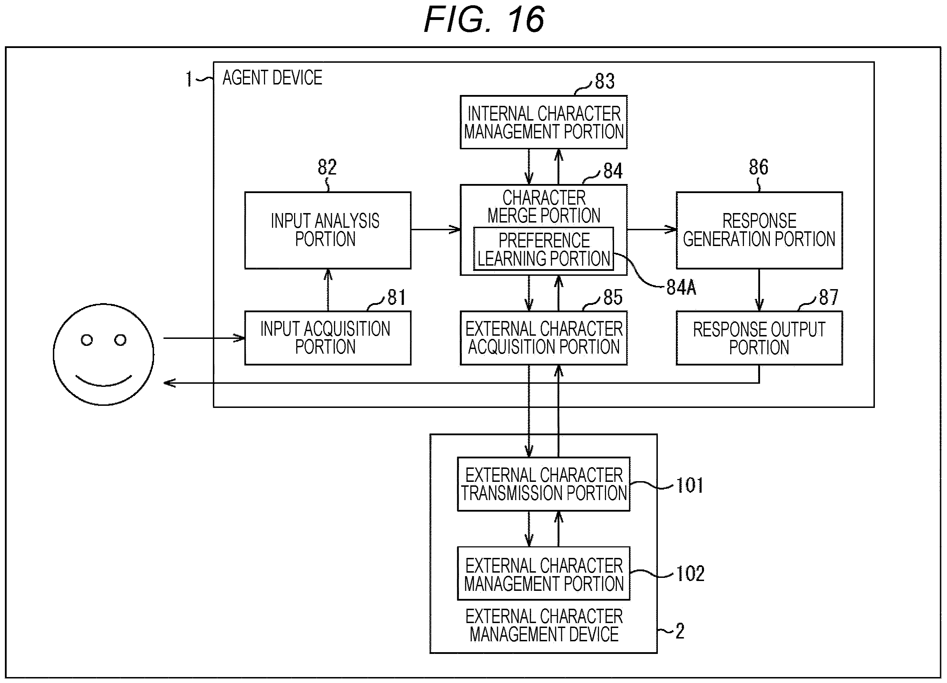

Among the configurations shown in Fig. 13, the same configurations as the configurations described with reference to Fig. 9 are denoted by the same reference numerals. Redundant descriptions will be omitted as appropriate. The same applies to Fig. 16 described later.

The configuration of the agent device 1 shown in Fig. 13 is different from the configuration of the agent device 1 shown in Fig. 9 in that an external character management portion 88 is provided. That is, in the agent device 1 of Fig. 13, the agent device 1 itself manages the external character to be used for merging with an internal character.

As similar to the external character management portion 102 of Fig. 9, the external character management portion 88 manages an external character DB, which is a database of external characters. The external character management portion 88 reads the attribute information of the external character corresponding to the character type requested by an external character acquisition portion 85 from the external character DB, and outputs the attribute information to the external character acquisition portion 85.

As described above, the function of managing the external characters used for merging with the feature of the internal character may be provided to an external device, or may be provided to the agent device 1 itself.

Additionally, among the configurations shown in Fig. 9 and other drawings, not only the external character management portion 88, but also any configuration other than the input acquisition portion 81 and the response output portion 87 can be implemented by a device other than the agent device 1.

### • Modification 6

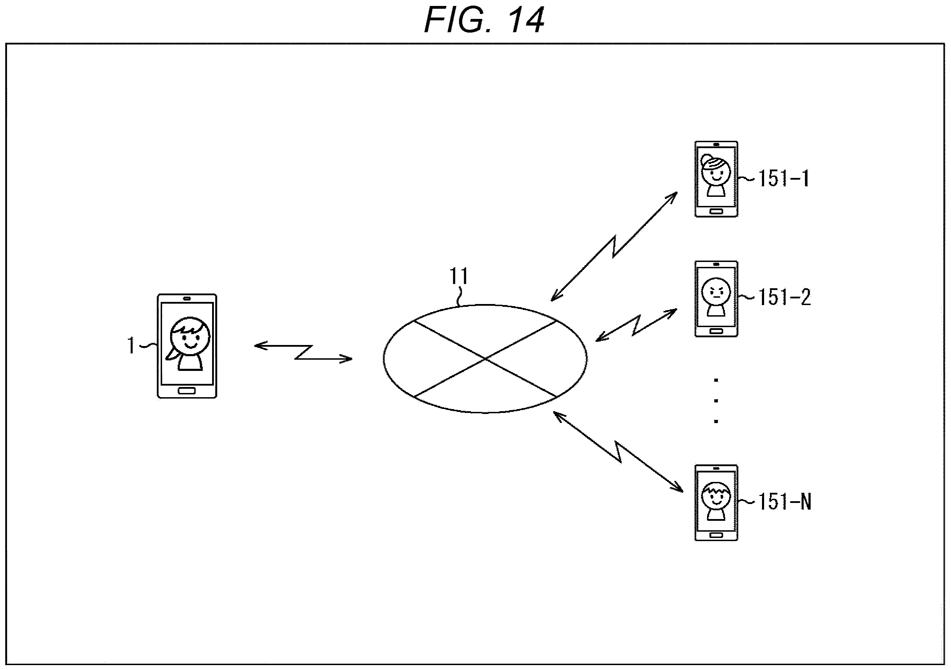

Fig. 14 is a diagram showing another configuration example of the agent system.

In the example of Fig. 14, portable terminals 151-1 to 151-N having a similar agent function as an agent device 1 are shown. In each of the portable terminals 151-1 to 151-N, one internal character is managed, and information is presented to its user through the internal character.

An external character acquisition portion 85 of the agent device 1 communicates with a predetermined one of the portable terminals 151-1 to 151-N, and acquires attribute information of an internal character managed by the portable terminal. The attribute information acquired by the external character acquisition portion 85 is used as the attribute information of the external character, for merging with the internal character of the agent device 1.

Thus, the external character used for merging with the internal character of the agent device 1 can also be the internal character of another device.

### • Modification 7

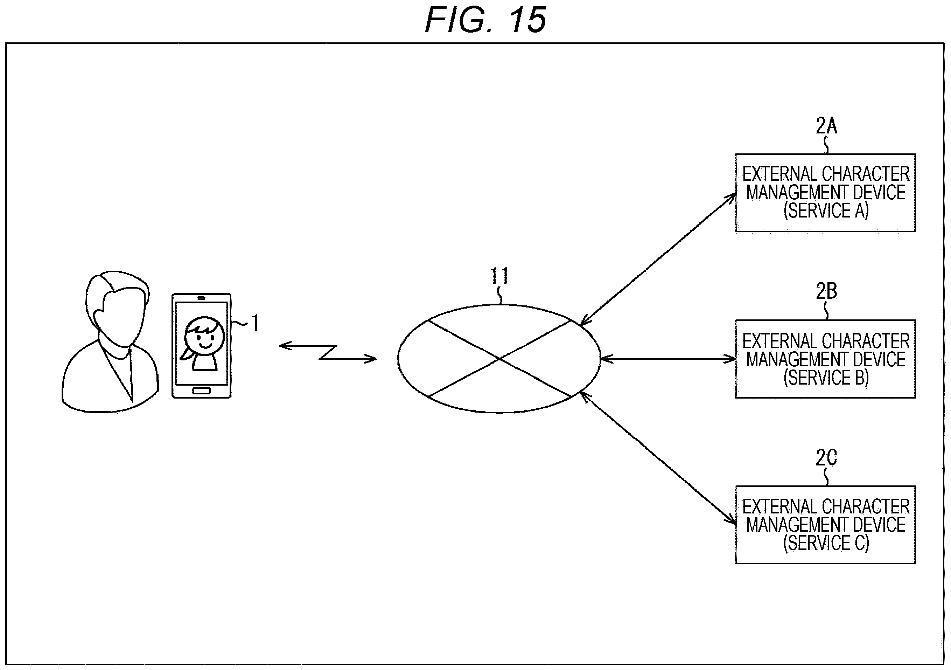

Fig. 15 is a diagram showing still another configuration example of the agent system.

In the example of Fig. 15, external character management devices 2A to 2C are shown as devices having a similar function as the external character management device 2 of Fig. 1. The external character management devices 2A to 2C are devices managed by providers of services A to C, respectively. The services A to C are various services such as a delivery service of food such as pizza, a travel agency service, and a commodity sales service.

For example, the external character management devices 2A to 2C each manage one external character. The external characters managed by the external character management devices 2A to 2C are used to provide the respective services.

In a case where the user operates an agent device 1 to access a web site of the service A and attempts to use the service A, an external character acquisition portion 85 of the agent device 1 communicates with the external character management device 2A, and acquires attribute information of the external character managed by the external character management device 2A. In this case, the external character is selected with the service used by the user as the context.

The attribute information acquired by the external character acquisition portion 85 is merged with attribute information of the internal character of the agent device 1, and the service A is provided by the merged internal character. For example, in a case where the service A is a pizza delivery service, product introduction, interaction with the user for ordering, and the like will be performed through the merged internal character.

Similarly, in a case where the user uses the service B or C, attribute information of the external character managed by the external character management device 2B or attribute information of the external character managed by the external character management device 2C is acquired, and is used for merging with the attribute information of the internal character of the agent device 1.

Thus, in the agent system of Fig. 15, the external character for the service to be used by the user is merged with the internal character, and the service is provided using the merged internal character. As a result, the service is provided by the internal character reflecting the feature of the external character corresponding to the service.

Since the service is provided by a character in which a slight change is added to the feature of an internal character that the user normally uses and feels attached to, the user can use the service with the same feeling as in usual communication.

As a service provider, it is possible to implement a system that provides a service through a character simply by preparing an external character having a feature corresponding to the service that the service provider provides. This makes it easy to develop a service. Additionally, since the service is provided by the internal character that the user feels attached to, sales improvement is expected.

### • Modification 8

Transactions of the external character itself may be performed. In this case, in a server that manages external characters, external characters created by various users are managed and sold, for example.

The user of an agent device 1 can change the feature of the internal character according to his/her preference by selecting a desired external character, taking in attribute information of the selected external character to the agent device 1, and merging it with the internal character.

### • Modification 9

The preference of the user with respect to the merged internal character may be learned, and the feature of the internal character may be changed according to the preference of the user.

Fig. 16 is a block diagram showing a functional configuration example of an agent device 1 and an external character management device 2.

The configuration of the agent device 1 shown in Fig. 16 is different from the configuration of the agent device 1 shown in Fig. 9 in that a character merge portion 84 is provided with a preference learning portion 84A.

The preference learning portion 84A learns the user's preference with respect to the internal character, and outputs the learning result of the user preference to an internal character management portion 83. The preference of the user with respect to the internal character is learned each time a merge is performed, for example.

The internal character management portion 83 adjusts the attribute of the internal character on the basis of the learning result by the preference learning portion 84A. For example, in a case where it is identified on the basis of the learning result that the user likes a complimenting character, the internal character management portion 83 adjusts the attribute of the internal character so as to output speech including complimentary remarks.

The user's preference may be learned on the basis of the analysis result by an input analysis portion 82, or the user may select whether or not the user likes the internal character and the preference may be learned on the basis of the selection result.

This makes it possible to generate an internal character that allows the user to feel more attached.

### • Modification 10

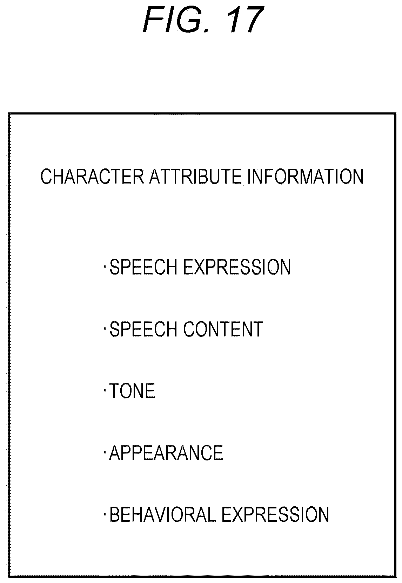

An agent device 1 may be implemented as a robot type device. In this case, as shown in Fig. 17, behavioral expression is also included in the attribute information that defines the feature of the character.

The behavioral expression is an attribute that represents how the agent device 1 acts. Actions of characters having different behavioral expression attributes are expressed differently even when performing actions of the same content, such as an action expressing joy or an action expressing anger, for example.

For example, in a case of merging features of a character in which a behavioral expression attribute of a cute gesture is set and a character in which a behavioral expression attribute of a fierce gesture is set, the merged character will be a character that performs an intermediate gesture.

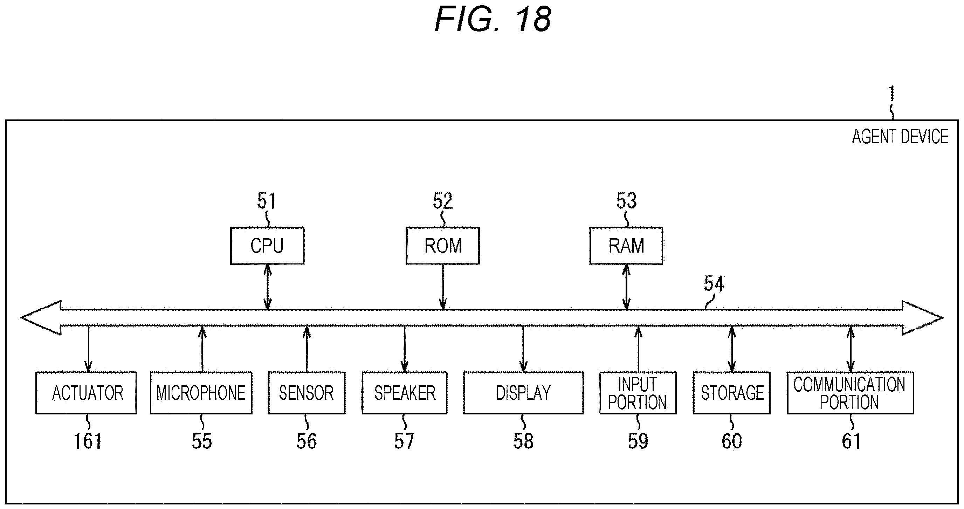

Fig. 18 is a block diagram showing another hardware configuration example of the agent device 1.

Among the configurations shown in Fig. 18, the same configurations as those shown in Fig. 7 are denoted by the same reference numerals. Redundant descriptions will be omitted. The configuration shown in Fig. 18 differs from the configuration shown in Fig. 7 in that an actuator 161 is additionally provided.

The actuator 161 drives each part forming a casing of the agent device 1 according to the control of a CPU 51. The actuator 161 implements the agent device 1 that communicates with the user by action.

### • Configuration example of computer

The series of processing described above can be executed by hardware or software. In a case where the series of processing is executed by software, a program forming the software is installed from a program recording medium to a computer incorporated in dedicated hardware, a general-purpose personal computer, or the like.

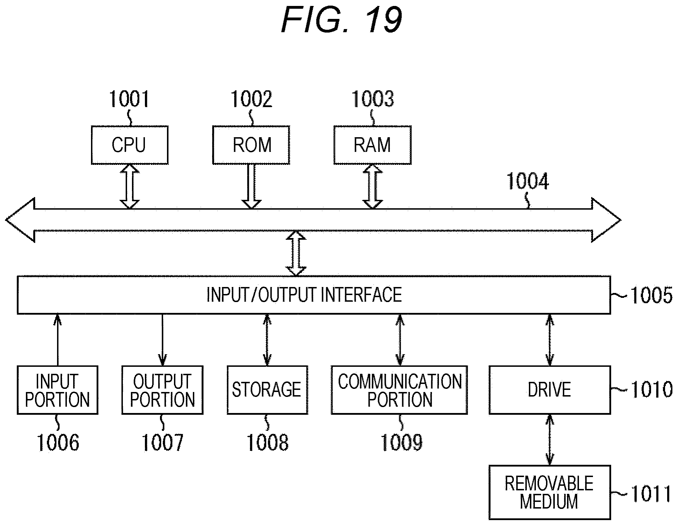

Fig. 19 is a block diagram showing a hardware configuration example of a computer that executes the series of processing described above according to a program.

The external character management device 2 described above is implemented by a computer having the configuration shown in Fig. 19.

A CPU 1001, A ROM 1002, and a RAM 1003 are mutually connected by a bus 1004.

An input/output interface 1005 is also connected to the bus 1004. An input portion 1006 including a keyboard, a mouse, and the like, and an output portion 1007 including a display, a speaker, and the like are connected to the input/output interface 1005. Additionally, a storage 1008 such as a hard disk and a non-volatile memory, a communication portion 1009 such as a network interface, and a drive 1010 for driving the removable medium 1011 are connected to the input/output interface 1005.

In the computer configured as described above, the CPU 1001 loads, a program stored in the storage 1008 onto the RAM 1003 through the input/output interface 1005 and the bus 1004, and executes the program to perform the above-described series of processing, for example.

The program executed by the CPU 1001 is provided by being recorded in the removable medium 1011 or through a wired or wireless transmission medium such as a local area network, the Internet, or digital broadcasting, and is installed in the storage 1008, for example.

Note that the program executed by the computer may be a program that performs processing in chronological order according to the order described in the present specification, or may be a program that performs processing in parallel, or at a necessary timing such as when a call is made.

Embodiments of the present technology are not limited to the above-described embodiments, and various modifications can be made without departing from the scope of the present technology.

For example, the present technology can have a cloud computing configuration in which one function is shared and processed by a plurality of devices through a network.

Additionally, each step described in the above-described flowchart can be executed by one device or in a shared manner by a plurality of devices.

Moreover, in a case where a plurality of processes is included in one step, the plurality of processes included in one step can be executed by being shared by a plurality of devices in addition to being executed by one device.

In the present specification, a system refers to a collection of a plurality of components (devices, modules (parts), and the like), and it does not matter whether or not all the components are in the same case. For this reason, a plurality of devices housed in separate cases and connected through a network, and one device housing a plurality of modules in one case are both systems.

Note that the effect described in the present specification is merely an illustration and is not restrictive. Hence, other effects can be obtained.

### • Example of configuration combination

The present technology can also be configured as follows.
(1) An information processor including:
   an acquisition portion that acquires a context; and
   a character selection portion that selects, on the basis of the context, a predetermined character to be used for presenting information to a user from among a plurality of characters for which attributes defining different features are set.
(2) The information processor according to (1) further including:
   a management portion that manages a main character selected as the main character; and
   an output controller that presents information to the user using the main character.
(3) The information processor according to (2), in which
   the character selection portion merges the attribute set for the predetermined character with the attribute set for the main character, and
   the output controller presents information to the user using the main character having a feature defined by the merged attribute.
(4) The information processor according to (3), in which
   the character selection portion merges a plurality of types of the attributes set for the main character and the predetermined character by assigning predetermined weights to the same types of attributes.
(5) The information processor according to (4), in which
   the feature of each of the plurality of characters and the main character is defined by the attribute of at least any one of speech expression, speech content, tone, or appearance.
(6) The information processor according to (5), in which
   the output controller presents information to the user on the basis of information regarding a rule of the speech content or on the basis of model information of the speech content obtained by performing learning based on a dialogue corpus.
(7) The information processor according to any one of (1) to (6), in which
   the acquisition portion analyzes text data input by the user or speech voice data of the user, and acquires the context.
(8) The information processor according to any one of (1) to (7), in which
   the character selection portion selects the predetermined character from among the plurality of characters managed by an external device.
(9) The information processor according to any one of (1) to (7) further including a character management portion that manages the plurality of characters, in which
   the character selection portion selects the predetermined character from among the plurality of characters managed by the character management portion.
(10) The information processor according to any one of (1) to (9), in which
   the acquisition portion acquires a content selected by the user as the context, and
   the character selection portion selects the predetermined character according to the content selected by the user.
(11) The information processor according to any one of (1) to (10), in which
   the acquisition portion acquires a content to be presented to the user as the context, and
   the character selection portion selects the predetermined character according to the content to be presented to the user.
(12) The information processor according to any one of (1) to (11), in which
   the acquisition portion acquires a profile of the user as the context, and
   the character selection portion selects the predetermined character according to the profile of the user.
(13) The information processor according to any one of (1) to (12), in which
   the acquisition portion acquires a service to be used by the user as the context, and
   the character selection portion selects the predetermined character according to the service.
(14) The information processor according to any one of (1) to (13), in which
   the acquisition portion acquires, as the context, an emotion of the user recognized on the basis of at least any one of an analysis result of a face image of the user, an analysis result of a speech voice of the user, or an analysis result of a speech content of the user, and
   the character selection portion selects the predetermined character according to the emotion of the user.
(15) The information processor according to any one of (3) to (6) further including a preference learning portion that learns a preference of the user with respect to the main character having a feature defined by the merged attribute, in which
   the management portion adjusts the attribute set for the main character on the basis of a learning result of the preference of the user.
(16) The information processor according to (3), in which
   the character selection portion selects a plurality of characters as the predetermined character, and merges the attribute set for each of the plurality of selected predetermined characters with the attribute set for the main character.
(17) An information processing method including the steps of:
   acquiring a context; and
   selecting, on the basis of the context, a predetermined character to be used for presenting information to a user from among a plurality of characters for which attributes defining different features are set.
(18) A program that causes a computer to perform processing including the steps of:
   acquiring a context; and
   selecting, on the basis of the context, a predetermined character to be used for presenting information to a user from among a plurality of characters for which attributes defining different features are set.

### REFERENCE SIGNS LIST

- 1: Agent device
- 2: External character management device
- 81: Input acquisition portion
- 82: Input analysis portion
- 83: Internal character management portion
- 84: Character merge portion
- 85: External character acquisition portion
- 86: Response generation portion
- 87: Response output portion
- 102: External character management portion
- 101: External character transmission portion

## Claims

1. An information processor comprising:
an acquisition portion that acquires a context; and
a character selection portion that selects, on a basis of the context, a predetermined character to be used for presenting information to a user from among a plurality of characters for which attributes defining different features are set.

2. The information processor according to claim 1 further comprising:
a management portion that manages a main character selected as the main character; and
an output controller that presents information to the user using the main character.

3. The information processor according to claim 2, wherein
the character selection portion merges the attribute set for the predetermined character with the attribute set for the main character, and
the output controller presents information to the user using the main character having a feature defined by the merged attribute.

4. The information processor according to claim 3, wherein
the character selection portion merges a plurality of types of the attributes set for the main character and the predetermined character by assigning predetermined weights to the same types of attributes.

5. The information processor according to claim 4, wherein
the feature of each of the plurality of characters and the main character is defined by the attribute of at least any one of speech expression, speech content, tone, or appearance.

6. The information processor according to claim 5, wherein
the output controller presents information to the user on a basis of information regarding a rule of the speech content or on a basis of model information of the speech content obtained by performing learning based on a dialogue corpus.

7. The information processor according to claim 1, wherein
the acquisition portion analyzes text data input by the user or speech voice data of the user, and acquires the context.

8. The information processor according to claim 1, wherein
the character selection portion selects the predetermined character from among the plurality of characters managed by an external device.

9. The information processor according to claim 1 further comprising a character management portion that manages the plurality of characters, wherein
the character selection portion selects the predetermined character from among the plurality of characters managed by the character management portion.

10. The information processor according to claim 1, wherein
the acquisition portion acquires a content selected by the user as the context, and
the character selection portion selects the predetermined character according to the content selected by the user.

11. The information processor according to claim 1, wherein
the acquisition portion acquires a content to be presented to the user as the context, and
the character selection portion selects the predetermined character according to the content to be presented to the user.

12. The information processor according to claim 1, wherein
the acquisition portion acquires a profile of the user as the context, and
the character selection portion selects the predetermined character according to the profile of the user.

13. The information processor according to claim 1, wherein
the acquisition portion acquires a service to be used by the user as the context, and
the character selection portion selects the predetermined character according to the service.

14. The information processor according to claim 1, wherein
the acquisition portion acquires, as the context, an emotion of the user recognized on a basis of at least any one of an analysis result of a face image of the user, an analysis result of a speech voice of the user, or an analysis result of a speech content of the user, and
the character selection portion selects the predetermined character according to the emotion of the user.

15. The information processor according to claim 3 further comprising a preference learning portion that learns a preference of the user with respect to the main character having a feature defined by the merged attribute, wherein
the management portion adjusts the attribute set for the main character on a basis of a learning result of the preference of the user.

16. The information processor according to claim 3, wherein
the character selection portion selects a plurality of characters as the predetermined character, and merges the attribute set for each of the plurality of selected predetermined characters with the attribute set for the main character.

17. An information processing method comprising the steps of:
acquiring a context; and
selecting, on a basis of the context, a predetermined character to be used for presenting information to a user from among a plurality of characters for which attributes defining different features are set.

18. A program that causes a computer to perform processing comprising the steps of:
acquiring a context; and
selecting, on a basis of the context, a predetermined character to be used for presenting information to a user from among a plurality of characters for which attributes defining different features are set.
